# EUROPEAN PATENT SPECIFICATION

(11) **EP 4 260 964 B1**
(45) Date of publication and mention of the grant of the patent: **25.03.2026**
(21) Application number: 21906562.0
(22) Date of filing: 13.12.2021
(51) Int. Cl.: B22D 25/02, F16D 65/02, F16D 55/226

(54) **METHOD FOR PRODUCING CALIPER HALF BODY OF DISC BRAKE CALIPER BODY, CALIPER HALF BODY OF DISC BRAKE CALIPER BODY, AND METHOD FOR PROVIDING DISC BRAKE CALIPER BODY**
VERFAHREN ZUR HERSTELLUNG EINES SATTELHALBKÖRPERS EINES SCHEIBENBREMSSATTELKÖRPERS, SATTELHALBKÖRPER EINES SCHEIBENBREMSSATTELKÖRPERS UND VERFAHREN ZUR HERSTELLUNG EINES SCHEIBENBREMSSATTELKÖRPERS
PROCÉDÉ DE PRODUCTION D'UN DEMI-CORPS D'ÉTRIER DE CORPS D'ÉTRIER DE FREIN À DISQUE, DEMI-CORPS D'ÉTRIER DE CORPS D'ÉTRIER DE FREIN À DISQUE, ET PROCÉDÉ DE FOURNITURE DE CORPS D'ÉTRIER DE FREIN À DISQUE

(30) Priority: 14.12.2020 JP 2020206561
(43) Date of publication of application: 18.10.2023
(73) Proprietor: Astemo, Ltd., Tokyo 100-0004 (JP)
(72) Inventor: ATSUTA, Daiki, Hitachinaka-shi, Ibaraki 312-8503 (JP)
(74) Representative: Hoefer & Partner Patentanwälte mbB
(86) International application number: PCT/JP2021/045782
(87) International publication number: WO 2022/131200

(56) References cited:
- IT-A1- 201800 002 973
- JP-A- 2000 337 408
- JP-A- 2009 228 729
- JP-A- 2009 228 729
- JP-A- 2013 230 531
- JP-A- 2013 230 531
- JP-A- 2013 245 795
- JP-A- 2013 245 795
- JP-A- 2019 100 349
- JP-A- 2019 100 349

## Description

### Technical Field

The present invention relates to a method for producing a caliper half body of a disc brake caliper body, a caliper half body of a disc brake caliper body, and a method for providing a disc brake caliper body, and more particularly, to a method for producing a caliper half body of a caliper body, a caliper half body of a disc brake caliper body, and a method for providing a disc brake caliper body, the production method involving producing at least one of a pair of caliper half bodies, the pair of caliper half bodies each having a cylinder hole and being configured to be used in multiple types of disc brake caliper bodies having the same outer shape and different cylinder hole diameters, using the same casting material having a pilot hole of the cylinder hole, the caliper body being formed by coupling the pair of caliper half bodies with a bridge portion straddling an outer peripheral side of a disc rotor.

### Background Art

In the related art, as a piston facing-type caliper body formed by coupling a pair of caliper half bodies arranged on both sides of a disc rotor and each having a cylinder hole with a bridge portion straddling an outer peripheral side of the disc rotor, there is a caliper body in which a union hole through which a hydraulic fluid is introduced into one of the caliper half bodies and a bleeder hole through which air in the hydraulic fluid is discharged are formed, the union hole and the cylinder hole communicate with each other, an introduction hole through which the hydraulic fluid is introduced into the cylinder hole is formed, and the bleeder hole communicates with the introduction hole (for example, see PTL 1).

### Citation list

### Patent Literature

PTL 1: JP4510217B

### Summary of Invention

### Technical Problem

In PTL 1, when the caliper half bodies to be used in multiple types of disc brake caliper bodies having the same outer shape and different cylinder hole diameters are produced in which the introduction hole is drilled from a union hole side toward the cylinder hole, multiple types of casting materials having introduction holes of different cylinder hole diameters, different lengths, and different angles are required.

Therefore, the present invention is to provide a method for producing a caliper half body of a disc brake caliper body, a caliper half body of a disc brake caliper body, and a method for providing a disc brake caliper body, the production method involves producing, using the same casting material, at least one of a pair of caliper half bodies to be used in multiple types of disc brake caliper bodies having the same outer shape and different cylinder hole diameters, and a cost can be reduced by the production method.

### Solution to Problem

In order to achieve the above-described object, a method for producing a caliper half body of a disc brake caliper body of the present invention is a method for producing multiple caliper half bodies of a disc brake caliper body. The disc brake caliper body is formed by joining joint surfaces of a pair of caliper half bodies arranged on both sides of a disc rotor with a bridge portion straddling an outer peripheral side of the disc rotor. The method involves producing at least one of the pair of caliper half bodies to be used in multiple types of the disc brake caliper bodies having the same outer shape and different cylinder hole diameters using the same casting material having a pilot hole of a cylinder hole. The method includes: an introduction hole drilling step of forming an introduction hole configured to allow a hydraulic fluid to be introduced into the cylinder hole in the same casting material by drilling at the same angle from an end surface serving as the joint surface toward a bottom side of the pilot hole; a cylinder hole cutting step of cutting the pilot hole into a cylinder hole diameter set according to the multiple types of disc brake caliper bodies; and a communication hole cutting step of forming a communication hole allowing a bottom side of the cut cylinder hole and the introduction hole to communicate with each other by contouring the bottom side of the cylinder hole.

It is preferred that the same casting material has the multiple pilot holes in a disc circumferential direction, and the method for producing a caliper half body of a disc brake caliper body further includes a connection hole cutting step of forming, by a contouring process, a connection hole connecting bottom sides of adjacent cylinder holes.

It is preferred that the same casting material has the multiple pilot holes in a disc circumferential direction and a connection hole formed by a cast hole connecting bottom sides of the adjacent pilot holes.

In addition, a caliper half body of a disc brake caliper body of the present invention is a caliper half body produced by the method for producing a caliper half body of a disc brake caliper body, and the communication hole is formed in a semicircular shape.

It is preferred that in the caliper half body having the multiple cylinder holes in the disc circumferential direction, the connection hole is formed in a semicircular shape.

A method for providing a disc brake caliper body of the present invention is a method for providing a disc brake caliper body, the method involving providing multiple types of disc brake caliper bodies having different cylinder hole diameters. The disc brake caliper body is formed by joining a pair of caliper half bodies arranged on both sides of a disc rotor. The method includes: producing multiple types of first caliper half bodies having different cylinder hole diameters by the method for producing a caliper half body of a disc brake caliper body according to any one of claims 1 to 3; and joining the first caliper half bodies and second caliper half bodies.

### Advantageous Effects of Invention

According to the method for producing a caliper half body of a disc brake caliper body and the caliper half body of a disc brake caliper body of the present invention, a hydraulic fluid introduction hole is machined in a hydraulic fluid introduction hole cutting step in the same casting material having the pilot hole of the cylinder hole to form a casting material in which the hydraulic fluid introduction hole and the pilot hole of the cylinder hole are provided in advance. The communication hole can be easily and reliably formed even when the cylinder hole diameters are different from each other by performing the cylinder hole cutting step of cutting the cylinder hole into the set diameter in the casting material, and the communication hole cutting step of forming the communication hole allowing the bottom side of the cut cylinder hole and the introduction hole to communicate with each other by contouring the bottom side of the cylinder hole. Accordingly, at least one of the pair of caliper half bodies to be used in the multiple types of disc brake caliper bodies having the same outer shape and different cylinder hole diameters can be produced using the same casting material, and a cost can be reduced.

The same casting material has the multiple pilot holes of the cylinder holes in the disc circumferential direction, and the method for producing a caliper half body of a disc brake caliper body further includes the connection hole cutting step of forming, by the contouring process, the connection hole connecting the bottom sides of the adjacent cylinder holes, and thus the connection hole can be easily and reliably formed.

The same casting material has the multiple pilot holes of the cylinder holes in the disc circumferential direction and the connection hole formed by the cast hole connecting the bottom sides of the adjacent pilot holes, and thus the connection hole can be formed without performing the connection hole cutting step.

According to the method for providing a disc brake caliper body of the present invention, the first caliper half bodies can be produced using the same casting mold, and thus a production management cost of the caliper bodies can be reduced.

### Brief Description of Drawings

[FIG. 1] FIG. 1 is a front view of a disc brake for a vehicle according to a first embodiment of the present invention.
[FIG. 2] FIG. 2 is a rear view of the same disc brake for a vehicle.
[FIG. 3] FIG. 3 is a plan view of the same disc brake for a vehicle.
[FIG. 4] FIG. 4 is a side view of the same disc brake for a vehicle.
[FIG. 5] FIG. 5 is a cross-sectional view taken along a line V-V in FIG. 4.
[FIG. 6] FIG. 6 is a cross-sectional view taken along a line VI-VI in FIG. 1.
[FIG. 7] FIG. 7 is a cross-sectional view taken along a line VII-VII in FIG. 2.
[FIG. 8] FIG. 8 is a front view of main portions in a state in which a union bolt and a hose banjo are attached to a union hole.
[FIG. 9] FIG. 9 is a side view of the state in which the union bolt and the hose banjo are attached to the union hole.
[FIG. 10] FIG. 10 is a cross-sectional view taken along a line X-X in FIG. 8.
[FIG. 11] FIG. 11 is a front view of a caliper body showing the first embodiment of the present invention.
[FIG. 12] FIG. 12 is a rear view of an opposite-vehicle body-side caliper half body.
[FIG. 13] FIG. 13 is a cross-sectional view taken along a line XIII-XIII in FIG. 11.
[FIG. 14] FIG. 14 is a front view of the caliper body on a vehicle body-side.
[FIG. 15] FIG. 15 is a rear view of a caliper half body on the vehicle body-side.
[FIG. 16] FIG. 16 is a cross-sectional view taken along a line XVI-XVI in FIG. 15.
[FIG. 17] FIG. 17 is a view showing a contouring process.

### Description of Embodiments

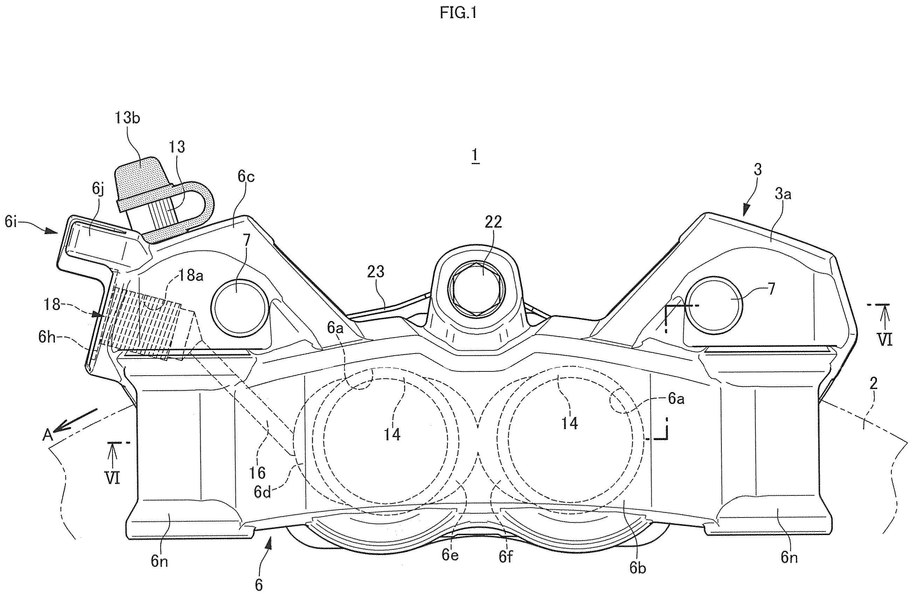

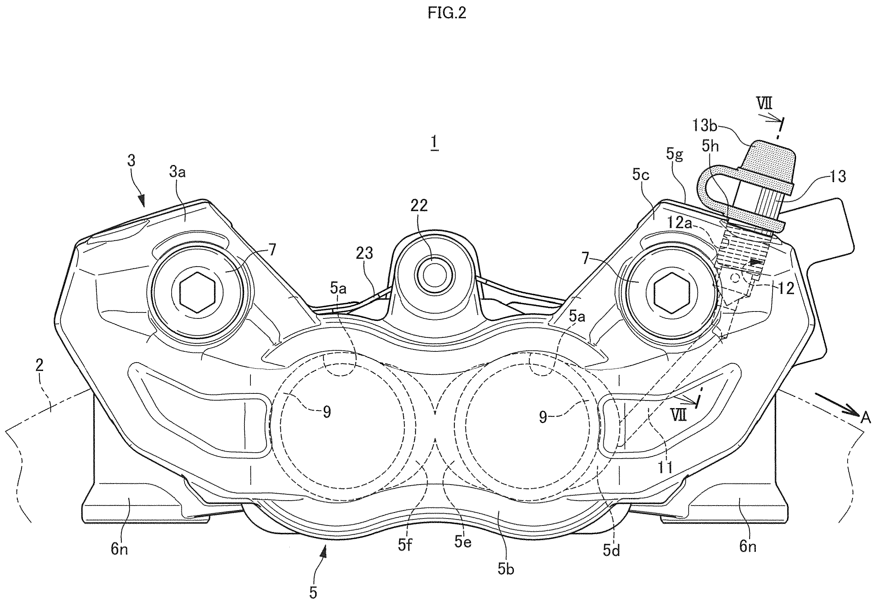

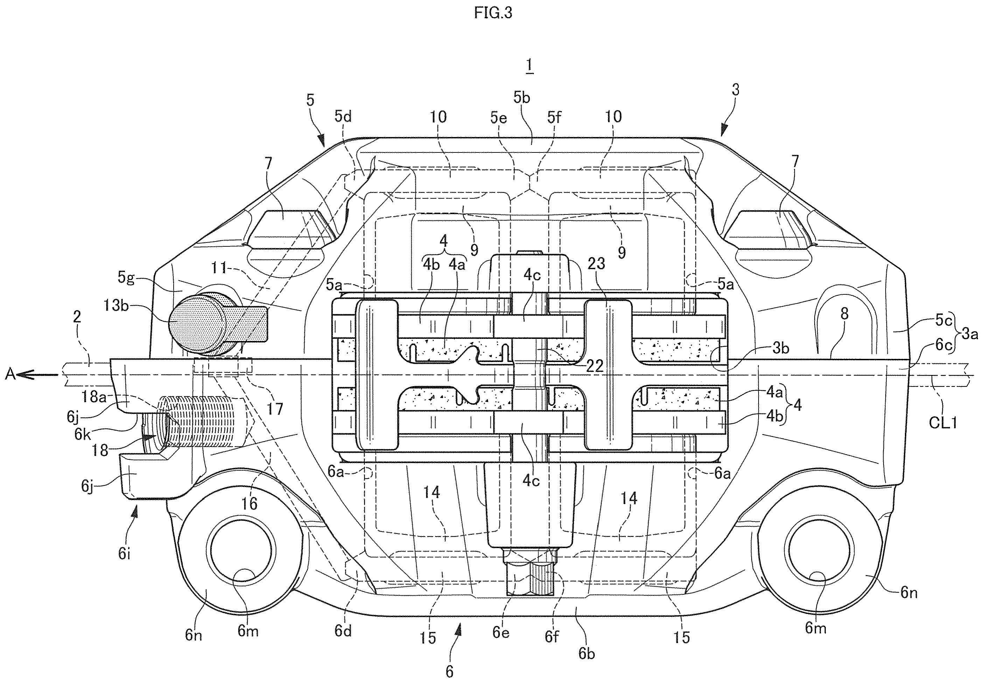

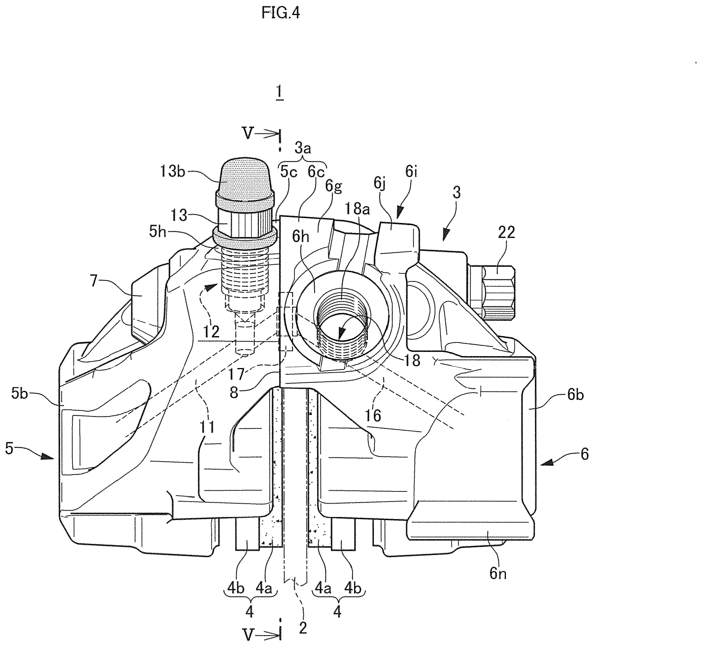

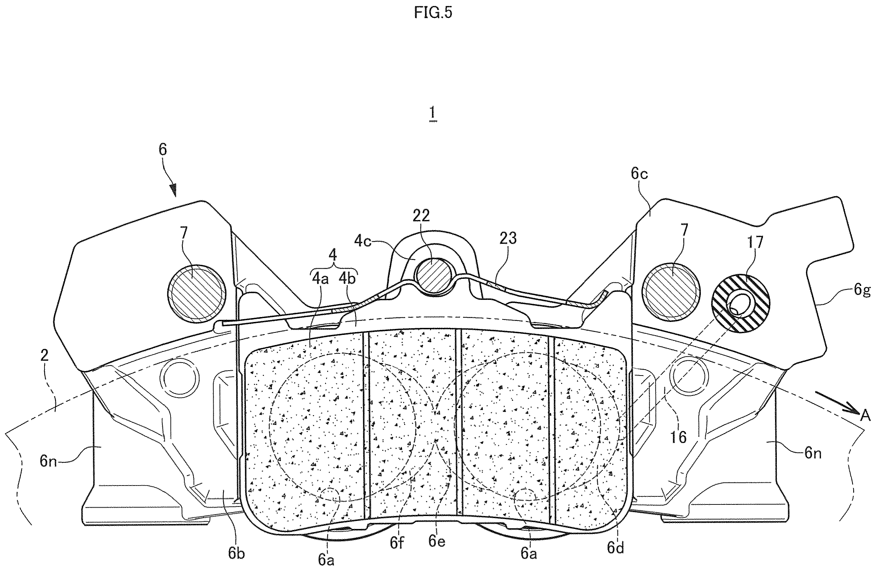

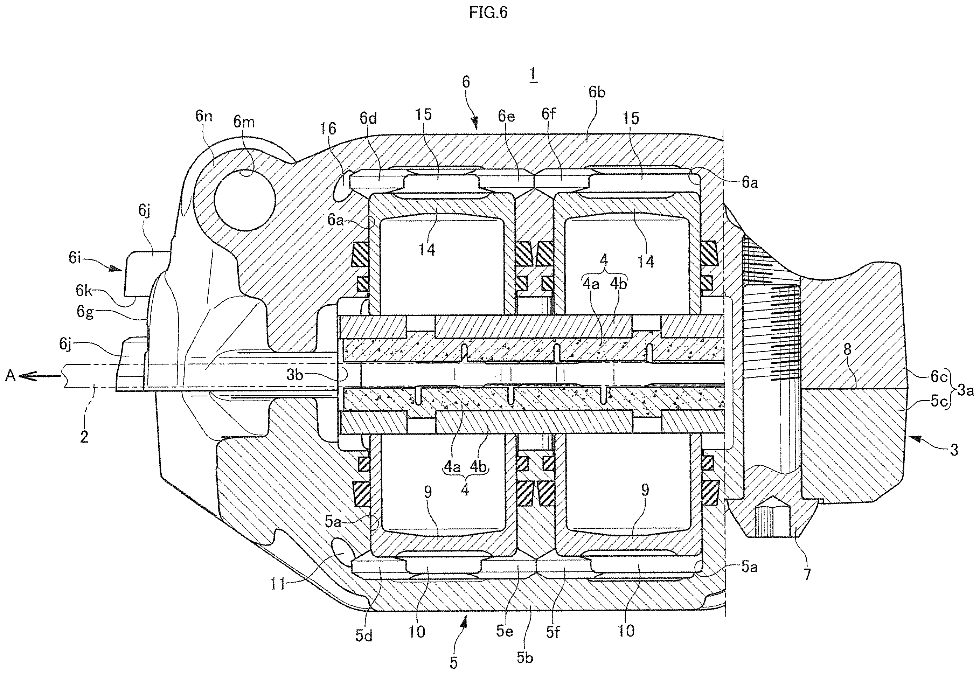

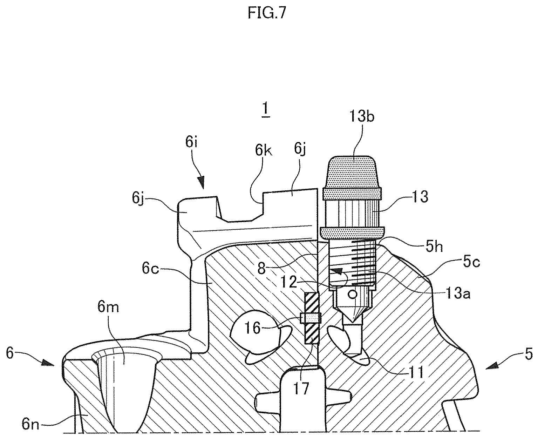

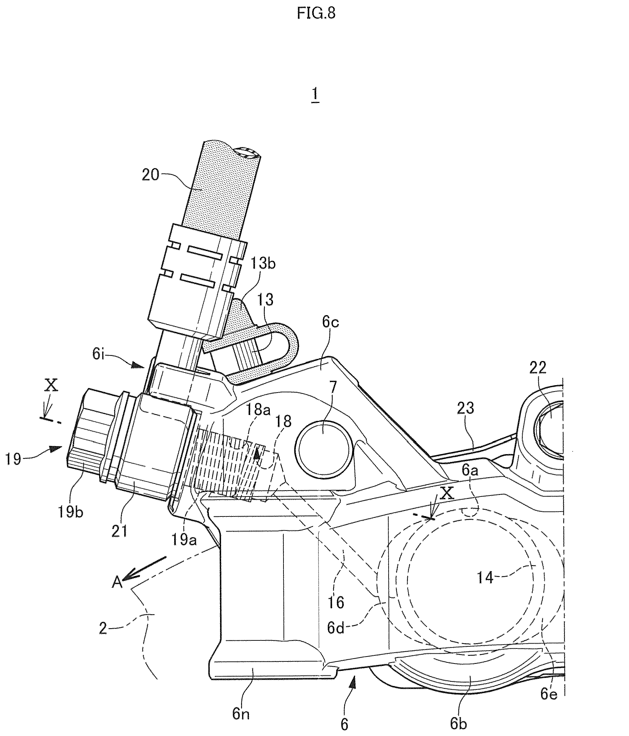

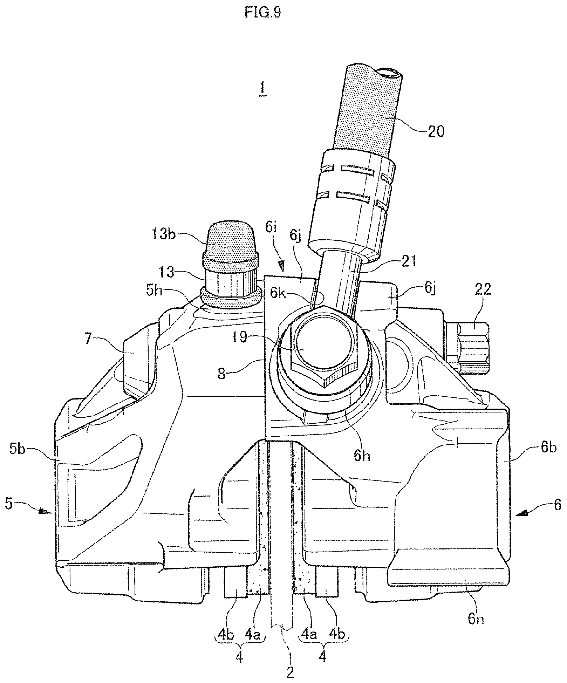

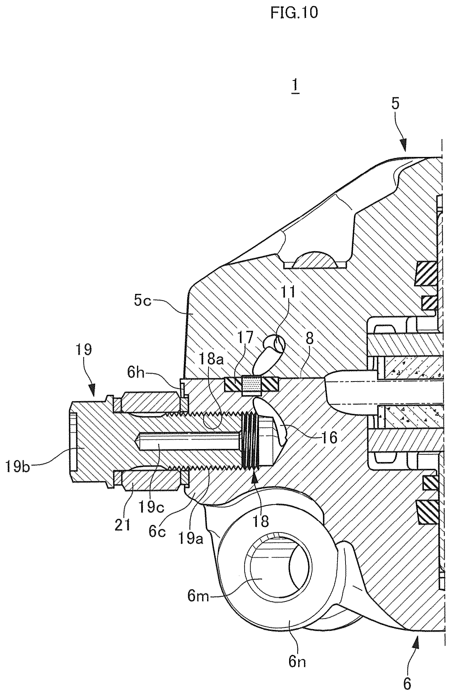

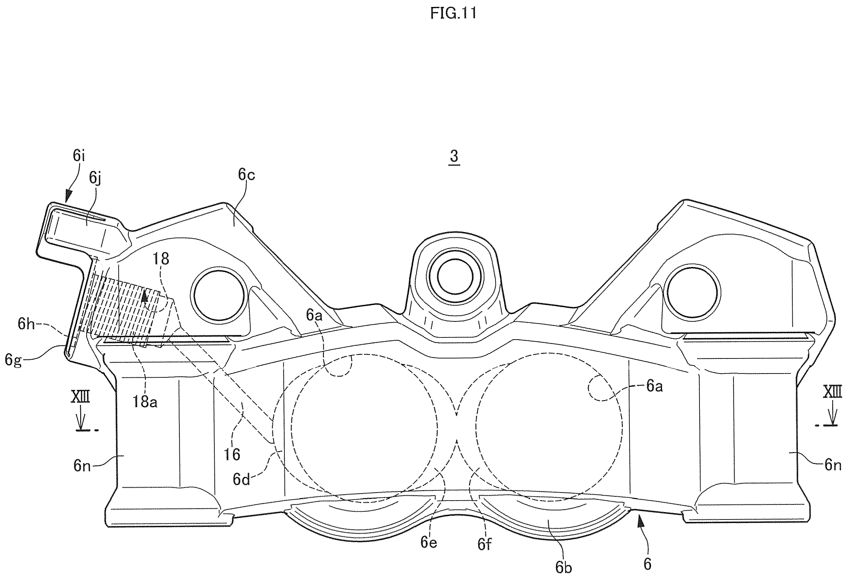

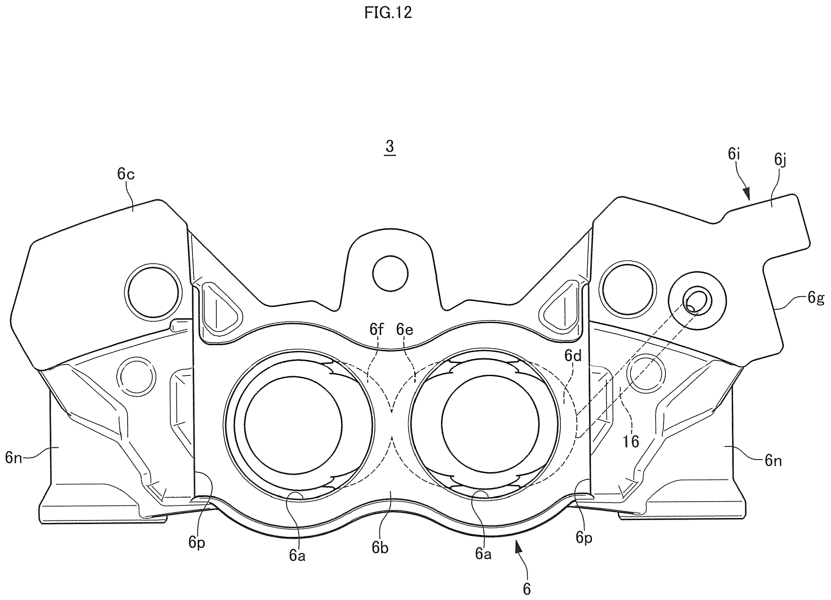

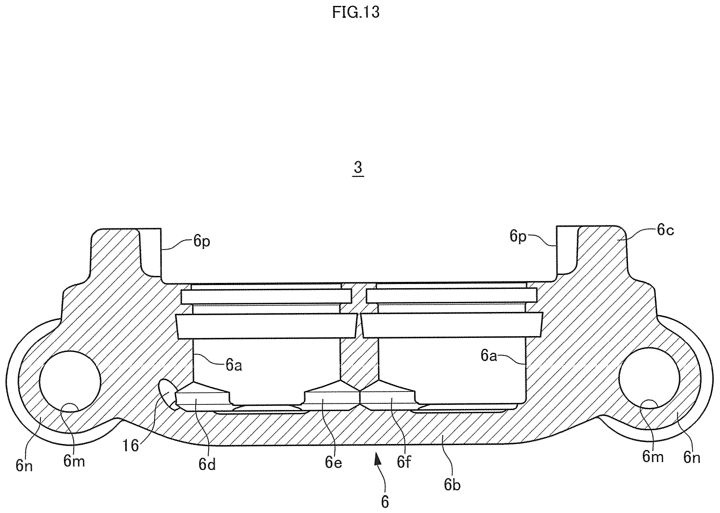

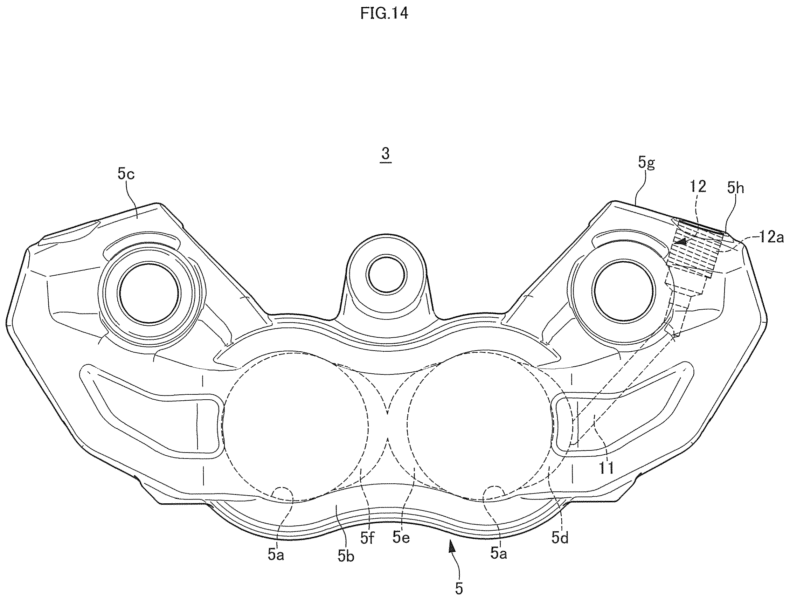

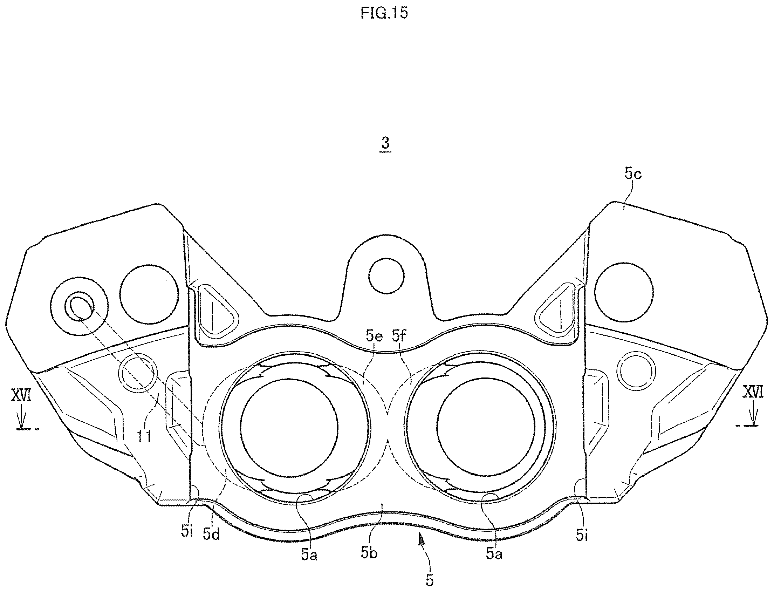

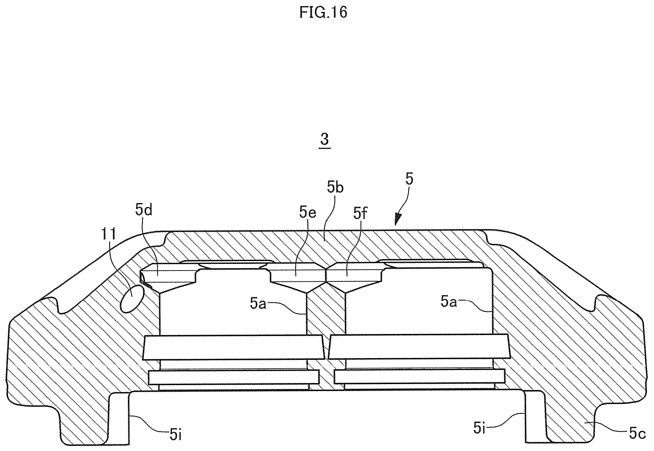

FIGS. 1 to 17 are views showing an embodiment of a disc brake for a vehicle using a caliper body formed by a method for producing a caliper half body according to the present invention, in which an arrow A indicates a rotation direction of a disc rotor that rotates integrally with wheels when a vehicle moves forward, and a disc outward-rotation-side and a disc inward-rotation-side to be described later are for when the vehicle moves forward.

A disc brake 1 for a vehicle of the present embodiment includes a disc rotor 2 that rotates integrally with wheels (not shown) in an arrow A direction, a caliper body 3 attached to a vehicle body on one side of the disc rotor 2, and a pair of friction pads 4, 4 that are arranged inside the caliper body 3 in a manner of facing each other with the disc rotor 2 interposed therebetween.

The caliper body 3 is formed by integrally coupling, with two coupling bolts 7, 7, a vehicle body-side caliper half body 5 (caliper half body of the present invention) and an opposite-vehicle body-side caliper half body 6 (caliper half body of the present invention), which are divided by a bridge portion 3a straddling an outer peripheral side of the disc rotor 2.

The vehicle body-side caliper half body 5 includes an acting portion 5b having cylinder holes 5a, 5a arranged side by side in a disc circumferential direction, and a bridge half body 5c that constitutes substantially half of the bridge portion 3a. Similar to the vehicle body-side caliper half body 5, the opposite-vehicle body-side caliper half body 6 includes an acting portion 6b having cylinder holes 6a, 6a arranged side by side in the disc circumferential direction, and a bridge half body 6c that constitutes substantially half of the bridge portion 3a. In addition, a length of the bridge half body 6c of the opposite-vehicle body-side caliper half body 6 in a disc axial direction is larger than a length of the bridge half body 5c of the vehicle body-side caliper half body 5 in the disc axial direction. When the caliper body 3 formed by butt-joining the bridge half bodies 5c, 6c is assembled to the vehicle body, a joint surface 8 is located on a vehicle body-side with respect to a center CL1 in a width direction of the disc rotor 2.

In the vehicle body-side caliper half body 5, pistons 9, 9 are inserted into the cylinder holes 5a, 5a, and hydraulic pressure chambers 10, 10 into which a hydraulic fluid is introduced are defined between bottom sides of the cylinder holes 5a, 5a and the pistons 9, 9. In addition, a first hydraulic fluid introduction hole 11 is drilled from a dividing surface serving as the joint surface 8 on the disc outward-rotation-side of the bridge half body 5c toward the hydraulic pressure chamber 10 of the cylinder hole 5a on the disc outward-rotation-side. A part of a bottom of the cylinder hole 5a on the disc outward-rotation-side includes a first contouring processed portion 5d that allows the hydraulic pressure chamber 10 on the disc outward-rotation-side and the first hydraulic fluid introduction hole 11 to communicate with each other by a contouring process, and a second contouring processed portion 5e that is contoured toward the hydraulic pressure chamber 10 on the disc inward-rotation-side. Further, a part of a bottom of the cylinder hole 5a on the disc inward-rotation-side includes a third contouring processed portion 5f that is contoured toward the second contouring processed portion 5e, and the second contouring processed portion 5e and the third contouring processed portion 5f communicate with each other to form a connection hole, whereby the first hydraulic fluid introduction hole 11, the hydraulic pressure chamber 10 on the disc outward-rotation-side, and the hydraulic pressure chamber 10 on the disc inward-rotation-side communicate with one another.

A bleeder hole 12 that opens to a disc radial direction outer end surface 5g and communicates with the first hydraulic fluid introduction hole 11 is provided on a disc radial direction outer end on the disc outward-rotation-side of the bridge half body 5c. The bleeder hole 12 is formed with, on an opening side, a female screw portion 12a into which a bleeder screw 13 is screwed, and the disc radial direction outer end surface 5g on an opening outer periphery is formed with a mounting seat surface 5h for the bleeder screw 13. The bleeder screw 13 includes an air discharge hole on an inner peripheral portion thereof and a male screw portion 13a, which is screwed into the female screw portion 12a, on an outer peripheral portion thereof, and a rubber bleeder cap 13b is covered on a tip head portion.

Similar to the vehicle body-side caliper half body 5, in the opposite-vehicle body-side caliper half body 6, pistons 14, 14 are inserted into the cylinder holes 6a, 6a, and hydraulic pressure chambers 15, 15 are defined between bottom sides of the cylinder holes 6a, 6a and the pistons 14, 14. In addition, a second hydraulic fluid introduction hole 16 is drilled from a dividing surface serving as the joint surface 8 on the disc outward-rotation-side of the bridge half body 6c toward the hydraulic pressure chamber 15 on the disc outward-rotation-side. The first hydraulic fluid introduction hole 11 and the second hydraulic fluid introduction hole 16 communicate with each other at the joint surface 8, and a seal member 17 is interposed on an outer peripheral side of a communication portion. A part of a bottom of the cylinder hole 6a on the disc outward-rotation-side includes a fourth contouring processed portion 6d that allows the hydraulic pressure chamber 15 on the disc outward-rotation-side and the second hydraulic fluid introduction hole 16 to communicate with each other by a contouring process, and a fifth contouring processed portion 6e that is contoured toward the hydraulic pressure chamber 15 on the disc inward-rotation-side. Further, a part of a bottom of the cylinder hole 6a on the disc inward-rotation-side includes a sixth contouring processed portion 6f that is contoured toward the fifth contouring processed portion 6e, and the fifth contouring processed portion 6e and the sixth contouring processed portion 6f communicate with each other to form a connection hole, whereby the second hydraulic fluid introduction hole 16, the hydraulic pressure chamber 15 on the disc outward-rotation-side, and the hydraulic pressure chamber 15 on the disc inward-rotation-side communicate with one another.

Further, a union hole 18 that opens to a disc outward-rotation-side end surface 6g and communicates with the second hydraulic fluid introduction hole 16 is provided on a disc outward-rotation-side end of the bridge half body **6c.** The union hole 18 is formed with, on an opening side, a female screw portion 18a into which a union bolt 19 is screwed, and the disc outward-rotation-side end surface 6g on an opening outer periphery is formed with a mounting seat surface 6h for the union bolt 19. A hose banjo 21 fixed to an end of a brake pipe 20 is attached to the union bolt 19, and a rotation-stop portion 6i for the hose banjo 21 is formed on an outer periphery of the mounting seat surface 6h. The rotation-stop portion 6i includes a wall portion 6j that protrudes from an outer peripheral side of the mounting seat surface 6h and protects the coupling between the union bolt 19 and the hose banjo 21, and an engaging portion 6k obtained by cutting out a part of the wall portion 6j to stop rotation of the hose banjo 21, and the hose banjo 21 is not co-rotated when the union bolt 19 is screwed into the union hole 18 by clamping the hose banjo 21 with the engaging portion 6k. The union bolt 19 includes a male screw portion 19a that is screwed into the female screw portion 18a and a hexagonal head portion 19b, a hydraulic fluid communication hole 19c is formed inside the male screw portion 19a, and the brake pipe 20 communicates with the union hole 18 via the union bolt 19.

Radial mount-type vehicle body mounting portions 6n, 6n having mounting bolt insertion holes 6m, 6m in a disc radial direction are formed on the disc inward-rotation-side and the disc outward-rotation-side of the opposite-vehicle body-side caliper half body 6, and the caliper body 3 is attached to the vehicle body by screwing mounting bolts inserted into the mounting bolt insertion holes 6m, 6m to caliper mounting portions provided on the vehicle body-side.

In the caliper body 3, the vehicle body-side caliper half body 5 and the opposite-vehicle body-side caliper half body 6 formed in this manner are joined by the bridge portion 3a and coupled by the coupling bolts 7, 7, whereby the first hydraulic fluid introduction hole 11 and the second hydraulic fluid introduction hole 16 communicate with each other, and accordingly, the first hydraulic fluid introduction hole 11 and the second hydraulic fluid introduction hole 16 communicate with the hydraulic pressure chambers 10, 10 of the vehicle body-side caliper half body 5 and the hydraulic pressure chambers 15, 15 of the opposite-vehicle body-side caliper half body 6. Further, the union hole 18 communicates with the second hydraulic fluid introduction hole 16, and thus a hydraulic fluid is supplied to the hydraulic pressure chambers 10, 10, 15, and 15 via the union bolt 19, the first hydraulic fluid introduction hole 11, and the second hydraulic fluid introduction hole 16. In addition, the bleeder hole 12 communicates with the first hydraulic fluid introduction hole 11, and thus air mixed in the hydraulic fluid introduced into the first hydraulic fluid introduction hole 11, the second hydraulic fluid introduction hole 16, and the hydraulic pressure chambers 10, 10, 15, and 15 is discharged to the outside via the bleeder screw 13.

The friction pad 4 includes a lining 4a which is in sliding contact with a side surface of the disc rotor 2, and a metal back plate 4b to which the lining 4a is adhered. A hanging sheet 4c extends from an upper center of the back plate 4b, and a hanger pin 22 is inserted into the hanging sheet 4c. The hanger pin 22 extends across both the acting portions 5b and 6b in the disc axial direction through a ceiling opening 3b formed in the bridge portion 3a of the caliper body 3, and is movable in the disc axial direction between torque receiving portions 5i, 5i, 6p, and 6p respectively provided on the disc inward-rotation-side and the disc outward-rotation-side of the vehicle body-side caliper half body 5 and the opposite-vehicle body-side caliper half body 6. In addition, a pad spring 23 is provided over the back plate 4b, the bridge portion 3a, and the hanger pin 22, and the friction pads 4, 4 are pressed toward the disc outward-rotation-side and a disc radial direction inner side.

Next, a method for producing the vehicle body-side caliper half body 5 of the present embodiment will be described. The vehicle body-side caliper half body 5 is formed using a casting material to be used for a vehicle body-side caliper half body to be used in multiple types of disc brake caliper bodies having the same outer shape and different cylinder hole diameters.

As is performed in the related art, the casting material is cast by a gravity casting method using multiple divided outer molds by which an outer shape of the vehicle body-side caliper half body 5 is formed and a core in which a cylinder hole is formed, and the casting material having pilot holes of two cylinder holes is cast. For the casting material, first, an introduction hole drilling step of drilling the first hydraulic fluid introduction hole 11 from an end surface on the disc outward-rotation-side serving as the joint surface 8 toward a bottom side of the pilot hole of the cylinder hole on the disc outward-rotation-side is performed.

Next, a cylinder hole cutting step of cutting the pilot holes of the two cylinder holes formed in the casting material into a set diameter of the cylinder hole 5a is performed, and the cylinder holes 5a, 5a are formed in the casting material. Further, a communication hole cutting step is performed in which the first contouring processed portion 5d (communication hole) is formed by performing a contouring process from the bottom side of the cylinder hole 5a on the disc outward-rotation-side toward the first hydraulic fluid introduction hole 11, and the first hydraulic fluid introduction hole 11 and the bottom side of the cylinder hole 5a on the disc outward-rotation-side communicate with each other via the first contouring processed portion 5d. In addition, a connection hole cutting step is performed in which the second contouring processed portion 5e is formed by performing a contouring process from the bottom side of the cylinder hole 5a on the disc outward-rotation-side toward the bottom side of the cylinder hole 5a on the disc inward-rotation-side, the third contouring processed portion 5f is formed by performing a contouring process from the bottom side of the cylinder hole 5a on the disc inward-rotation-side toward the bottom side of the cylinder hole 5a on the disc outward-rotation-side, and the second contouring processed portion 5e and the third contouring processed portion 5f communicate with each other to form the connection hole.

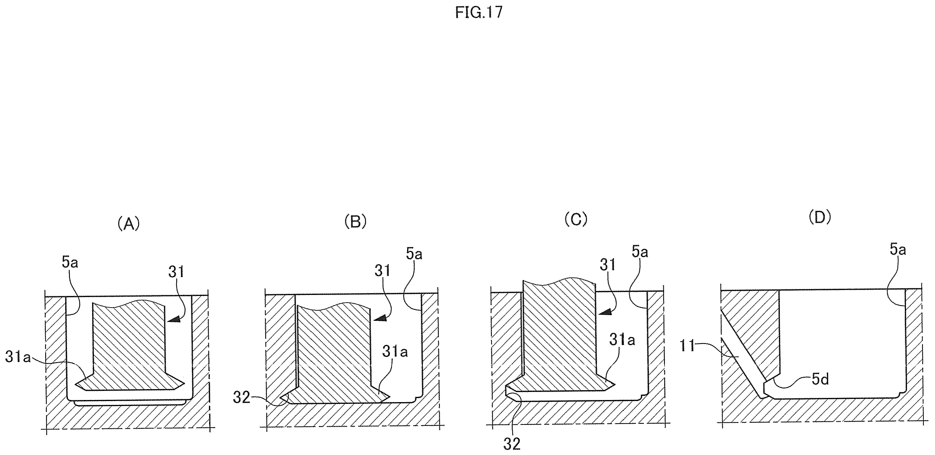

In the contouring process performed in the communication hole cutting step, for example, as shown in (A) of FIG. 17, a tool 31 is inserted into the cylinder hole 5a to be brought into contact with a bottom of the cylinder hole 5a, and as shown in (B) of FIG. 17, the tool 31 is moved to the disc outward-rotation-side of the pilot hole while a drill blade 31a rotates, and a cylinder circumferential groove 32 extending from the cylinder hole 5a to the disc outward-rotation-side is formed. Next, as shown in (C) of FIG. 17, the tool 31 is moved in a cylinder axial direction toward a cylinder hole opening side, and a length of the cylinder circumferential groove 32 in the disc axial direction is increased, and as shown in (D) of FIG. 17, the first contouring processed portion 5d that allows the first hydraulic fluid introduction hole 11 and the bottom side of the cylinder hole 5a to communicate with each other is formed.

In the contouring process performed in the connection hole cutting step, the tool 31 is inserted into the pilot hole of one cylinder hole 5a to be brought into contact with the bottom of the cylinder hole 5a, and the tool 31 is moved to the other adjacent cylinder hole side while the drill blade 31a rotates, and further the tool 31 is inserted into the pilot hole of the other cylinder hole 5a to be brought into contact with the bottom of the cylinder hole 5a, and the tool 31 is moved to the one adjacent cylinder hole side while the drill blade 31a rotates, whereby the connection hole that connects the cylinder holes 5a, 5a is formed.

When other vehicle body-side caliper half bodies having the same outer shape as the vehicle body-side caliper half body 5 and different cylinder hole diameters are produced, the same casting material as the casting material used for producing the vehicle body-side caliper half body 5 is used. First, an introduction hole drilling step of drilling a hydraulic fluid introduction hole from an end surface on a disc outward-rotation-side serving as the joint surface 8 toward a bottom side of a pilot hole of a cylinder hole on the disc outward-rotation-side at the same angle as the first hydraulic fluid introduction hole 11 is performed.

Next, a cylinder hole cutting step of cutting pilot holes of two cylinder holes formed in the casting material into a set cylinder hole diameter is performed, and the cylinder holes having the set diameter are formed in the casting material. Further, a communication hole cutting step is performed in which a first contouring processed portion (communication hole) is formed by performing a contouring process from the bottom side of the cylinder hole on the disc outward-rotation-side toward the hydraulic fluid introduction hole, and the hydraulic fluid introduction hole and the bottom side of the cylinder hole on the disc outward-rotation-side communicate with each other via the first contouring processed portion. In addition, a connection hole cutting step is performed in which a second contouring processed portion is formed by performing a contouring process from the bottom side of the cylinder hole on the disc outward-rotation-side toward the bottom side of the cylinder hole on a disc inward-rotation-side, a third contouring processed portion is formed by performing a contouring process from the bottom side of the cylinder hole on the disc inward-rotation-side toward the bottom side of the cylinder hole on the disc outward-rotation-side, and the second contouring processed portion and the third contouring processed portion communicate with each other to form a connection hole.

By producing the vehicle body-side caliper half bodies by the above-described method, the multiple vehicle body-side caliper half bodies having the same outer shape and different cylinder hole diameters can be produced by simply changing a cutting amount of the pilot holes of the cylinder holes in the cylinder hole cutting step using the same casting material, and a cost can be reduced. After the cylinder hole is cut into the set diameter in the cylinder hole cutting step, the communication hole that allows the bottom side of the cylinder hole and the first hydraulic fluid introduction hole to communicate with each other is formed by the contouring process in the communication hole cutting step, whereby the communication hole can be easily and reliably formed even when the cylinder hole diameters are different from each other.

The connection hole that connects the bottom sides of the adjacent cylinder holes is formed by contouring the bottom sides of the cylinder holes arranged side by side in the disc circumferential direction, whereby the connection hole can be easily and reliably formed. In addition, the contouring process for forming the communication hole or the connection hole is applied to a part of the bottoms of the cylinder holes, not the entire circumference, and thus a processing amount can be reduced.

The multiple types of caliper bodies having different cylinder hole diameters can be provided by producing the multiple types of first caliper half bodies having different cylinder hole diameters by the above-described method and joining them to the second caliper half bodies. Accordingly, the first caliper half bodies can be produced using the same casting mold in the production of the first caliper half bodies, and a production management cost of the caliper body can be reduced.

The present invention is not limited to the above-described embodiment, and the opposite-vehicle body-side caliper half body may be formed using the same casting material, or both the vehicle body-side caliper half body and the opposite-vehicle body-side caliper half body may be formed using the same casting material. Further, the casting material may be provided with the connection hole formed by the cast hole that connects the bottom sides of the adjacent pilot holes. The vehicle body mounting portion formed in the opposite-vehicle body-side caliper half body may be an axial mount-type vehicle body mounting portion having a mounting bolt insertion hole in the disc axial direction. Further, the number of cylinder holes formed in the caliper half body is any number.

### Reference Signs List

1: disc brake for vehicle; 2: disc rotor; 3: caliper body; 3a: bridge portion; 3b: ceiling opening; 4: friction pad; 4a: lining; 4b: back plate; 5: vehicle body-side caliper half body; 5a: cylinder hole; 5b: acting portion; 5c: bridge half body; 5d: first contouring processed portion; 5e: second contouring processed portion; 5f: third contouring processed portion; 5g: disc radial direction outer end surface; 5h: mounting seat surface; 5i: torque receiving portion; 6: opposite-vehicle body-side caliper half body; 6a: cylinder hole; 6b: acting portion; 6c: bridge half body; 6d: fourth contouring processed portion; 6e: fifth contouring processed portion; 6f: sixth contouring processed portion; 6g: disc outward-rotation-side end surface; 6h: mounting seat surface; 6i: rotation-stop portion; 6j: wall portion; 6k: engaging portion; 6m: mounting bolt insertion hole; 6n: vehicle body mounting portion; 6p: torque receiving portion; 7: coupling bolt; 8: joint surface; 9: piston; 10: hydraulic pressure chamber; 11: first hydraulic fluid introduction hole; 12: bleeder hole; 12a: female screw portion; 13: bleeder screw; 13a: male screw portion; 13b: bleeder cap; 14: piston; 15: hydraulic pressure chamber; 16: second hydraulic fluid introduction hole; 17: seal member; 18: union hole; 18a: female screw portion; 19: union bolt; 19a: male screw portion; 19b: hexagonal head portion; 19c: hydraulic fluid communication hole; 20: brake pipe; 21: hose banjo; 22: hanger pin; 23: pad spring; 31: tool; 31a: drill blade; 32: cylinder circumferential groove

## Claims

1. A method for producing multiple caliper half bodies (5, 6) of a disc brake caliper body (3),
- the disc brake caliper body (3) being formed by joining joint surfaces (8) of a pair of caliper half bodies (5, 6) arranged on both sides of a disc rotor (2) with a bridge portion (3a) straddling an outer peripheral side of the disc rotor (2),
- the method involving producing at least one of the pair of caliper half bodies (5, 6) to be used in multiple types of the disc brake caliper bodies (3) having the same outer shape and different cylinder hole diameters using the same casting material having a pilot hole of a cylinder hole (5a, 6a) ,
- the method comprising:
- an introduction hole drilling step of forming an introduction hole (11, 16) configured to allow a hydraulic fluid to be introduced into the cylinder hole (5a, 6a) in the same casting material by drilling at the same angle from an end surface serving as the joint surface (8) toward a bottom side of the pilot hole;
- a cylinder hole cutting step of cutting the pilot hole into a cylinder hole diameter set according to the multiple types of disc brake caliper bodies (3); and
- a communication hole cutting step of forming a communication hole allowing a bottom side of the cut cylinder hole (5a, 6a) and the introduction hole (11, 16) to communicate with each other by contouring the bottom side of the cylinder hole (5a, 6a).

2. The method for producing caliper half bodies of a disc brake caliper body according to claim 1, wherein:
- the same casting material has the multiple pilot holes in a disc circumferential direction,
- the method further comprising: a connection hole cutting step of forming, by a contouring process, a connection hole connecting bottom sides of adjacent cylinder holes (5a, 6a).

3. The method for producing caliper half bodies of a disc brake caliper body according to claim 1, wherein the same casting material has the multiple pilot holes in a disc circumferential direction (A) and a connection hole formed by a cast hole connecting bottom sides of the adjacent pilot holes.

4. A caliper half body (5, 6) of a disc brake caliper body (3),
- the caliper half body (5, 6) being produced by the method for producing caliper half bodies (5, 6) of a disc brake caliper body (3) according to any one of claims 1 to 3,
- wherein the communication hole is formed in a semicircular shape.

5. A caliper half body (5, 6) of a disc brake caliper body,
- the caliper half body (5, 6) being produced by the method for producing caliper half bodies (5, 6) of a disc brake caliper body (3) according to claim 2,
- wherein the connection hole is formed in a semicircular shape.

6. A method for providing a disc brake caliper body (3),
- the method involving providing multiple types of the disc brake caliper bodies (3) having different cylinder hole diameters,
- the disc brake caliper body being formed by joining a pair of caliper half bodies (5, 6) arranged on both sides of a disc rotor (2),
- the method comprising:
- producing multiple types of first caliper half bodies (5, 6) having different cylinder hole diameters by a method for producing caliper half bodies (5, 6) of a disc brake caliper body (3) according to any one of claims 1 to 3; and
- joining the first caliper half bodies (5, 6) and second caliper half bodies (5, 6).

## Patentansprüche

1. Verfahren zum Herstellen mehrerer Bremssattelhalbkörper (5, 6) eines Scheibenbremssattelkörpers (3),
- wobei der Scheibenbremssattelkörper (3) durch Verbinden von Verbindungsflächen (8) eines Paars von Bremssattelhalbkörpern (5, 6), die auf beiden Seiten eines Scheibenrotors (2) angeordnet sind, mit einem Brückenabschnitt (3a), der eine Außenumfangsseite des Scheibenrotors (2) überspannt, gebildet wird,
- wobei das Verfahren das Herstellen von mindestens einem des Paars von Bremssattelhalbkörpern (5, 6), die in mehreren Typen der Scheibenbremssattelkörper (3) zu verwenden sind, die die gleiche Außenform und unterschiedliche Zylinderlochdurchmesser aufweisen, unter Verwendung des gleichen Gussmaterials, das ein Pilotloch eines Zylinderlochs (5a, 6a) aufweist, umfasst,
- wobei das Verfahren Folgendes umfasst:
- einen Einführungslochbohrschritt des Bildens eines Einführungslochs (11, 16), das konfiguriert ist, um zu ermöglichen, dass ein Hydraulikfluid in das Zylinderloch (5a, 6a) in dem gleichen Gussmaterial durch Bohren in dem gleichen Winkel von einer Endfläche, die als die Verbindungsfläche (8) dient, zu einer Unterseite des Pilotlochs eingeführt wird;
- einen Zylinderlochschneidschritt des Schneidens des Pilotlochs in einen Zylinderlochdurchmesser, der gemäß den mehreren Typen von Scheibenbremssattelkörpern (3) eingestellt ist; und
- einen Kommunikationslochschneidschritt des Bildens eines Kommunikationslochs, das ermöglicht, dass eine Unterseite des geschnittenen Zylinderlochs (5a, 6a) und das Einführungsloch (11, 16) miteinander kommunizieren, indem die Unterseite des Zylinderlochs (5a, 6a) konturiert wird.

2. Verfahren zum Herstellen von Bremssattelhalbkörpern eines Scheibenbremssattelkörpers nach Anspruch 1, wobei:
- das gleiche Gussmaterial die mehreren Pilotlöcher in einer Scheibenumfangsrichtung aufweist,
- das Verfahren ferner Folgendes umfasst: einen Verbindungslochschneidschritt des Bildens, durch einen Konturierungsprozess, eines Verbindungslochs, das Unterseiten benachbarter Zylinderlöcher (5a, 6a) verbindet.

3. Verfahren zum Herstellen von Bremssattelhalbkörpern eines Scheibenbremssattelkörpers nach Anspruch 1, wobei das gleiche Gussmaterial die mehreren Pilotlöcher in einer Scheibenumfangsrichtung (A) und ein Verbindungsloch, das durch ein Gussloch gebildet ist, das Unterseiten der benachbarten Pilotlöcher verbindet, aufweist.

4. Bremssattelhalbkörper (5, 6) eines Scheibenbremssattelkörpers (3),
- wobei der Bremssattelhalbkörper (5, 6) durch das Verfahren zum Herstellen von Bremssattelhalbkörpern (5, 6) eines Scheibenbremssattelkörpers (3) nach einem der Ansprüche 1 bis 3 hergestellt wird,
- wobei das Kommunikationsloch in einer halbkreisförmigen Form gebildet ist.

5. Bremssattelhalbkörper (5, 6) eines Scheibenbremssattelkörpers,
- wobei der Bremssattelhalbkörper (5, 6) durch das Verfahren zum Herstellen von Bremssattelhalbkörpern (5, 6) eines Scheibenbremssattelkörpers (3) nach Anspruch 2 hergestellt wird,
- wobei das Verbindungsloch in einer halbkreisförmigen Form gebildet ist.

6. Verfahren zum Bereitstellen eines Scheibenbremssattelkörpers (3),
- wobei das Verfahren das Bereitstellen mehrerer Typen der Scheibenbremssattelkörper (3), die unterschiedliche Zylinderlochdurchmesser aufweisen, umfasst,
- wobei der Scheibenbremssattelkörper durch Verbinden eines Paars von Bremssattelhalbkörpern (5, 6), die auf beiden Seiten eines Scheibenrotors (2) angeordnet sind, gebildet wird,
- wobei das Verfahren Folgendes umfasst:
- Herstellen mehrerer Typen von ersten Bremssattelhalbkörpern (5, 6), die unterschiedliche Zylinderlochdurchmesser aufweisen, durch ein Verfahren zum Herstellen von Bremssattelhalbkörpern (5, 6) eines Scheibenbremssattelkörpers (3) nach einem der Ansprüche 1 bis 3; und
- Verbinden der ersten Bremssattelhalbkörper (5, 6) und der zweiten Bremssattelhalbkörper (5, 6).

## Revendications

1. Procédé de production de multiples demi-corps d'étrier (5, 6) d'un corps d'étrier de frein à disque (3),
- le corps d'étrier de frein à disque (3) étant formé en joignant des surfaces de joint (8) d'une paire de demi-corps d'étrier (5, 6) agencés sur les deux côtés d'un rotor de disque (2) avec une partie de pont (3a) chevauchant un côté périphérique externe du rotor de disque (2),
- le procédé impliquant la production d'au moins l'un de la paire de demi-corps d'étrier (5, 6) à utiliser dans de multiples types des corps d'étrier de frein à disque (3) ayant la même forme externe et différents diamètres de trou de cylindre en utilisant le même matériau de coulée ayant un trou pilote d'un trou de cylindre (5a, 6a),
- le procédé comprenant :
- une étape de perçage de trou d'introduction consistant à former un trou d'introduction (11, 16) configuré pour permettre à un fluide hydraulique d'être introduit dans le trou de cylindre (5a, 6a) dans le même matériau de coulée en perçant au même angle à partir d'une surface d'extrémité servant de surface de joint (8) vers un côté inférieur du trou pilote ;
- une étape de coupe de trou de cylindre consistant à couper le trou pilote en un diamètre de trou de cylindre défini selon les multiples types de corps d'étrier de frein à disque (3) ; et
- une étape de coupe de trou de communication consistant à former un trou de communication permettant à un côté inférieur du trou de cylindre coupé (5a, 6a) et au trou d'introduction (11, 16) de communiquer l'un avec l'autre en profilant le côté inférieur du trou de cylindre (5a, 6a).

2. Procédé de production de demi-corps d'étrier d'un corps d'étrier de frein à disque selon la revendication 1, dans lequel :
- le même matériau de coulée a les multiples trous pilotes dans une direction circonférentielle de disque,
- le procédé comprenant en outre : une étape de coupe de trou de raccordement consistant à former, par un processus de profilage, un trou de raccordement raccordant des côtés inférieurs de trous de cylindre adjacents (5a, 6a).

3. Procédé de production de demi-corps d'étrier d'un corps d'étrier de frein à disque selon la revendication 1, dans lequel le même matériau de coulée a les multiples trous pilotes dans une direction circonférentielle de disque (A) et un trou de raccordement formé par un trou coulé raccordant des côtés inférieurs des trous pilotes adjacents.

4. Demi-corps d'étrier (5, 6) d'un corps d'étrier de frein à disque (3),
- le demi-corps d'étrier (5, 6) étant produit par le procédé de production de demi-corps d'étrier (5, 6) d'un corps d'étrier de frein à disque (3) selon l'une quelconque des revendications 1 à 3,
- dans lequel le trou de communication est formé en une forme semi-circulaire.

5. Demi-corps d'étrier (5, 6) d'un corps d'étrier de frein à disque,
- le demi-corps d'étrier (5, 6) étant produit par le procédé de production de demi-corps d'étrier (5, 6) d'un corps d'étrier de frein à disque (3) selon la revendication 2,
- dans lequel le trou de raccordement est formé en une forme semi-circulaire.

6. Procédé de fourniture d'un corps d'étrier de frein à disque (3),
- le procédé impliquant la fourniture de multiples types des corps d'étrier de frein à disque (3) ayant différents diamètres de trou de cylindre,
- le corps d'étrier de frein à disque étant formé en joignant une paire de demi-corps d'étrier (5, 6) agencés sur les deux côtés d'un rotor de disque (2),
- le procédé comprenant :
- la production de multiples types de premiers demi-corps d'étrier (5, 6) ayant différents diamètres de trou de cylindre par un procédé de production de demi-corps d'étrier (5, 6) d'un corps d'étrier de frein à disque (3) selon l'une quelconque des revendications 1 à 3 ; et
- la jonction des premiers demi-corps d'étrier (5, 6) et des seconds demi-corps d'étrier (5, 6).
